(19) Europäisches Patentamt
European Patent Office
Office européen des brevets

(11) **EP 4 468 775 A1**

(12) **EUROPÄISCHE PATENTANMELDUNG**

(43) Veröffentlichungstag:
**27.11.2024 Patentblatt 2024/48**

(21) Anmeldenummer: **24176135.2**

(22) Anmeldetag: **15.05.2024**

(51) Internationale Patentklassifikation (IPC):
**H04W 24/02** (2009.01) **H04B 17/391** (2015.01)

(52) Gemeinsame Patentklassifikation (CPC):
**H04W 24/02; H04B 17/3913**

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH MA MD TN**

(30) Priorität: **23.05.2023 DE 102023113502**

(71) Anmelder: **Diehl Metering Systems GmbH
90451 Nürnberg (DE)**

(72) Erfinder:
• **Petkov, Hristo
  90425 Nürnberg (DE)**
• **Singh, Aditya
  91054 Erlangen (DE)**
• **Kauppert, Thomas
  90455 Nürnberg (DE)**

(74) Vertreter: **Diehl Patentabteilung
c/o Diehl Stiftung & Co. KG
Stephanstraße 49
90478 Nürnberg (DE)**

(54) **VERFAHREN ZUR ANPASSUNG VON FUNKPARAMETERN**

(57) Verfahren zur Anpassung von Funkparametern innerhalb eines bidirektionalen Funknetzwerks umfassend eine Vielzahl von Funkknoten sowie mindestens ein Gateway, wobei Funkverbindungen zwischen dem Gateway und den Funkknoten vorgesehen sind, wobei das Funknetzwerk als erster digitaler Zwilling in dem Funcknoten oder dem Gateway oder in einem Funknetzwerk-externen Head-End vorgesehen ist, wobei der jeweilige Received Signal Strength Indicator (RSSI) der Funkverbindungen bestimmt oder geschätzt wird und wobei ausgehend von dem jeweiligen RSSI der Pfadverlust der entsprechenden Funkverbindungen bestimmt oder geschätzt wird, wobei der jeweilige Pfadverlust der Funkverbindungen den entsprechenden Funkverbindungen des ersten digitalen Zwillings zugeordnet wird, und wobei ausgehend von dem jeweiligen Pfadverlust der Funkverbindungen des ersten digitalen Zwillings mindestens ein Funkparameter für eine zukünftige Datenübertragung mindestens einer Funkverbindung des Funknetzwerks angepasst wird.

Fig. 3

## Beschreibung

Die vorliegende Erfindung betrifft ein Verfahren zur Anpassung von Funkparametern gemäß dem Anspruch 1 sowie eine Kommunikationseinrichtung gemäß Anspruch 17.

### Technologischer Hintergrund

Die vorliegende Erfindung betrifft ein Verfahren zur Anpassung von Funkparametern in einem bidirektionalen Funknetzwerk. Ein derartiges Funknetzwerk umfasst eine Vielzahl von Funkknoten sowie mindestens ein Gateway. Ferner ist ein Funknetzwerk-externes Head-End vorgesehen, welches mit dem Gateway kommuniziert. Die Funkknoten können mit dem Gateway und/oder dem Head-End kommunizieren und hierbei Daten austauschen. In einer Uplink-Übertragung übermittelt ein Funkknoten Daten an das Gateway, welches diese das Head-End weiterleiten kann. In einer Downlink-Übertragung hingegen werden Daten vom Gateway an den Funkknoten gesendet. Das Gateway kann die Downlink-Übertragung hierbei von dem Head-End erhalten haben.

Bei einem Funkknoten kann es sich um eine Sensoreinrichtung zur Erfassung von Daten jeglicher Art, um eine Aktoreinrichtung zur Vornahme bestimmter Handlungen oder Maßnahmen oder um eine Kombination einer Sensoreinrichtung und einer Aktoreinrichtung handeln. Derartige Funkknoten werden mit einer eigenen, d.h. autarken, Energieversorgung in Form einer Batterie, vorzugsweise einer Longlife-Batterie, betrieben, die eine begrenzte, vom individuellen Energieverbrauch des Funkknotens abhängige Lebensdauer hat und nicht wieder aufladbar ist. Die Batterien decken die komplette Lebensdauer des Zählers ab, welche typischerweise im Bereich von 10 bis 16 Jahren liegt.

Üblicherweise findet die Datenübertragung in einem derartigen Netzwerk unsynchronisiert statt. Hierdurch können sich die Funksignale der Uplink-Übertragungen der einzelnen Funkknoten gegenseitig stören, wodurch deren Empfangsqualität bzw. Empfangswahrscheinlichkeit abnimmt. Insbesondere ist dies der Fall, wenn ein leistungsstärkeres Funksignal eines in der Nähe des Gateways positionierten

Funkknotens das Funksignal eines entfernt zum Gateway positionierten Funkknotens überlagert. Hierbei ist es möglich, dass das leistungsärmere Signal gar nicht mehr vom Gateway empfangen werden kann. Während einer Downlink-Übertragung kann es aus denselben Gründen ebenfalls zu Störungen bzw. Überlagerungen kommen.

Ausgehend von den aktuellen Bedingungen innerhalb des Funknetzwerks kann ein Netzwerkmanagementsystem die Funkparameter der Funkknoten oder des Gateways derart beeinflussen, dass sich die Funksignale der einzelnen Sender weniger stark gegenseitig beeinflussen. Hierdurch kann die Empfangswahrscheinlichkeit von Funksignale unabhängig von der Entfernung der Funkknoten vom Gateway erhöht wird.

### Druckschriftlicher Stand der Technik

Die EP 3 133 825 B1 offenbart ein bidirektionales Funk-Datenübertragungsverfahren zum unsynchronisierten Übermitteln von Messwert-Datentelegrammen von Zählern an einen Konzentrator über eine Uplink-Funkverbindung. Hierbei wird aufgrund einer Qualitätsinformation einer empfangenen Uplink-Funkverbindung mindestens ein Parameter einer Uplink-Funkverbindung derart beeinflusst, dass die Qualität der Uplink-Funkverbindung abnimmt, die Uplink-Funkverbindung allerdings noch funktioniert.

T. T. Nguyen, R. Caromi, K. Kallas and M. R. Souryal, "Deep Learning for Path Loss Prediction in the 3.5 GHz CBRS Spectrum Band," 2022 IEEE Wireless Communications and Networking Conference (WCNC), Austin, TX, USA, 2022, pp. 1665-1670, doi: 10.1109/WCNC51071.2022.9771737, beschreiben ein Neuronales Netzwerk zur Vorhersage des Pfadverlustes in einem 3,5 GHz Band.

### Aufgabe der vorliegenden Erfindung

Aufgabe der vorliegenden Erfindung ist es, ein Verfahren zur Verfügung zu stellen, welches eine verbesserte Anpassung der Funkparameter in einem Funknetzwerk gewährleistet.

### Lösung der Aufgabe

Die vorstehende Aufgabe wird durch ein Verfahren mit den Merkmalen des Anspruchs 1 sowie durch eine Kommunikationseinrichtung mit den Merkmalen gemäß Anspruch 17 gelöst. Zweckmäßige Ausgestaltungen des erfindungsgemäßen Verfahrens und der erfindungsgemäßen Kommunikationseinrichtung werden in den zugehörigen abhängigen Ansprüchen beansprucht.

Erfindungsgemäß wird ein Verfahren zur Anpassung von Funkparametern von mindestens einer Funkverbindung innerhalb eines bidirektionalen Funknetzwerks beansprucht, wobei das Funknetzwerk eine Vielzahl von Funkknoten sowie mindestens ein Gateway umfasst, wobei Funkverbindungen zur Datenübertragung zwischen dem Gateway und den Funkknoten vorgesehen sind, wobei das Funknetzwerk als erster digitaler Zwilling bzw. digital twin in dem Funkknoten oder dem Gateway oder in einem Funknetzwerk-externen Head-End vorgesehen bzw. gespeichert ist, wobei der jeweilige Received Signal Strength Indicator (RSSI) der Funkverbindungen zwischen dem Gateway und den jeweiligen Funkknoten bestimmt oder geschätzt wird und wobei ausgehend von dem jeweiligen RSSI der Pfadverlust, insbesondere der mittlere Pfadverlust, der entsprechenden Funkverbindungen bestimmt oder geschätzt wird, wobei der jeweilige Pfadverlust der Funkverbindungen zwischen den Funkknoten und dem Gateway den entsprechenden Funkverbindungen des ersten digitalen Zwillings zugeordnet wird, und wobei ausgehend von dem jeweiligen Pfadverlust der Funkverbindungen des ersten digitalen Zwillings mindestens ein Funkparameter für eine zukünftige, z. B. die nächste, Datenübertragung, insbesondere Uplink-Übertragung und/oder Downlink-Übertragung, mindestens einer Funkverbindung zwischen einem Gateway und einem Funkknoten des Funknetzwerks angepasst wird.

Der erste digitale Zwilling umfasst alle Funkknoten und alle Gateways sowie die Funkverbindungen des Funknetzwerks. Hierbei ist einer Funkverbindung des digitalen Zwillings deren entsprechender Pfadverlust zugeordnet, der für die entsprechende Funkverbindung des Funknetzwerks ermittelt wurde. Hierdurch stellt der erste digitale Zwilling z. B. eine digitale Repräsentanz bzw. Modell des Funknetzwerkes dar. Der erste digitale Zwilling ist hierbei in einer Kommunikationseinrichtung, insbesondere in einer Steuerungseinrichtung der Kommunikationseinrichtung, angeordnet, welche basierend auf dem ersten digitalen Zwilling eine Anpassung der Funkparameter der Funkverbindungen durchführen kann. Bei der Kommunikationseinrichtung handelt es sich um einen Funkknoten oder das Gateway oder das Head-End. Hierfür wird der ermittelte RSSI oder der Pfadverlust z. B. vom Empfänger der betreffenden Datenübertragung, also der Uplink-Übertragung und/oder der Downlink-Übertragung, an die Kommunikationseinrichtung weitergeleitet, welche den ersten digitalen Zwilling umfasst. Alternativ wird der Pfadverlust bzw. der RSSI von der Kommunikationseinrichtung mit dem ersten digitalen Zwilling bestimmt oder geschätzt. Bei der Downlink-Übertagung handelt es sich um eine Datenübertragung vom Gateway an einen Funkknoten, bei der Uplink-Übertragung handelt es sich um eine Datenübertragung vom Funkknoten an das Gateway.

Aufgrund des ersten digitalen Zwillings liegen die Eigenschaften, z. B. der RSSI und/oder die Dämpfung und/oder die Qualität und/oder Störer, der Funkverbindungen innerhalb des Funknetzwerks gebündelt vor. Ausgehend von diesen Eigenschaften kann nunmehr der mindestens eine Funkparameter für eine zukünftige Datenübertragung mindestens einer Funkverbindung des Funknetzwerks an die aktuell vorliegenden Eigenschaften der Funkverbindungen angepasst werden, sodass die Empfangswahrscheinlichkeit schlecht empfangbarer Funkknoten erhöht wird. Hierfür teilt die Kommunikationseinrichtung, auf welcher der erste digitale Zwilling angeordnet ist, dem Funkknoten und dem Gateway der entsprechenden Funkverbindung mit, mit welchen Funkparametern zukünftige Datenübertragungen, z. B. eine Uplink-Übertragung oder eine Downlink-Übertragung, ausgesendet werden sollen. Die neuen Funkparameter werden insbesondere über, vorzugsweise reguläre, Uplink-Übertragungen und/oder Downlink-Übertragungen an den entsprechenden Funkknoten und/oder das entsprechende Gateway übertragen. Infolgedessen kann die zukünftige Datenübertragung mit angepassten Funkparametern erfolgen, wodurch die Empfangswahrscheinlichkeit und/oder die Qualität der Funksignale beeinflusst wird. Insbesondere kann hierdurch die Sendeleistung von Funkknoten reduziert werden. Hierdurch kann erreicht werden, dass bisher schlecht empfangbare Funkknoten, welche entfernt vom Gateway positioniert sind, nunmehr besser empfangen werden, da deren Funkverbindung von nahe am Gateway positionierten Funkknoten weniger gestört werden. Der mindestens eine anpassbare Funkparameter kann die Sendeleistung und/oder die Länge und/oder die Anzahl der Wiederholungen und/oder Sendeintervalle und/oder Datenraten und/oder Frequenzkanäle und/oder der Sendezeitpunkt einer Uplink-Übertragung und/oder einer Downlink-Übertragung sein.

Vorzugsweise umfasst das Funknetzwerk zusätzlich Funkverbindungen zwischen den Funkknoten untereinander, wobei der jeweilige RSSI der Funkverbindungen zwischen den Funkknoten bestimmt oder geschätzt wird und wobei ausgehend von dem jeweiligen RSSI der Pfadverlust, insbesondere der mittlere Pfadverlust, der entsprechenden Funkverbindung bestimmt oder geschätzt wird, und wobei der jeweilige Pfadverlust der Funkverbindungen zwischen den Funkknoten den entsprechenden Funkverbindungen des ersten digitalen Zwillings zugeordnet werden, und wobei der jeweilige Pfadverlust der Funkverbindungen des ersten digitalen Zwillings zusätzlich zur Anpassung des mindestens einen Funkparameters für eine zukünftige Datenübertragung, insbesondere einer Uplink-Übertragung und/oder einer Downlink-Übertragung, mindestens einer Funkverbindung des Funknetzwerks herangezogen wird. Durch die Bestimmung des entsprechenden Pfadverlusts der Funkverbindungen untereinander kann festgestellt werden, welche Funcknoten sich gegenseitig stören. Somit können die Funkparameter der sich störenden Funkknoten derart angepasst werden, dass sie sich für zukünftige Datenübertragungen nicht stören. Dies kann beispielsweise durch ein zeitweiliges Abschalten eines Funkknotens oder durch eine Änderung der Sendeintervalle erreicht werden. Zusätzlich oder alternativ können z. B. einzelne Funkknoten in einen Ruhemodus versetzt werden, in welchem sie keine Daten aussenden, damit sie die benachbarten Funkknoten nicht stören.

Vorteilhafterweise wird der Pfadverlust für alle Funkverbindungen des Funknetzwerks bestimmt. Alternativ kann der Pfadverlust auch nur für einen Teil der Funkverbindungen ermittelt werden, z. B. nur für einen bestimmten Teil des Funknetzwerks.

Dadurch, dass, insbesondere ausgehend vom Pfadverlust der jeweiligen Funkverbindungen, der Pfadverlust-Exponent der einzelnen Funkverbindungen zwischen dem Gateway und den Funkknoten und/oder der einzelnen Funkverbindungen zwischen den Funkknoten untereinander bestimmt oder geschätzt wird, steht ein weiterer Parameter zu den Eigenschaften der Funkverbindungen des Funknetzwerks zur Verfügung, welcher ebenfalls den entsprechenden Funkverbindungen des digitalen Zwillings zugeordnet werden kann. Der Pfadverlust-Exponent gibt insbesondere Auskunft über den Standort des Funkknotens. Hierbei bedeutet ein Pfadlustexponent von 4 bis 5, dass sich der Funkknoten in einer Großstadt befindet, welcher viele Störer aufweist. Ferner bedeutet ein Pfadverlust-Exponent von ungefähr 3, dass sich der Funkknoten in einer Kleinstadt bzw. einer ländlichen Region mit wenigen Störern angeordnet ist. Ein Pfadverlust-Exponent von 2 bedeutet hingegen, dass keine Störer vorhanden sind.

Zweckmäßigerweise wird der mindestens eine Funkparameter für eine zukünftige Datenübertragung mindestens einer Funkverbindung zusätzlich in Abhängigkeit des Pfadverlust-Exponenten angepasst. Durch die Verwendung von zwei Parametern kann eine verbesserte Anpassung des mindestens einen Funkparameters an die tatsächlichen Eigenschaften der Funkverbindungen erreicht werden.

Dadurch, dass der Pfadverlust und/oder der Pfadverlust-Exponent basierend auf dem jeweils aktuellen RSSI der entsprechenden Funkverbindungen fortlaufend aktualisiert werden, sind der Pfadverlust und der Pfadverlust-Exponent an die aktuellen Eigenschaften der Funkverbindungen des Funknetzwerks angepasst. Hierbei wird der RSSI für eine Funkverbindung fortlaufend ermittelt und basierend darauf der Pfadverlust und/oder der Pfadverlust-Exponent bestimmt oder geschätzt.

Beispielsweise werden der jeweilige Pfadverlust und/oder der jeweilige Pfadverlust-Exponent der Funkverbindungen zwischen dem Gateway und der Funkknoten und/oder der Funkverbindungen der Funkknoten untereinander den entsprechenden Funkverbindungen des ersten digitalen Zwillings fortlaufend zugeordnet. Hierdurch wird der erste digitale Zwilling fortlaufend mit dem aktuellen Pfadverlust und/oder dem aktuellen Pfadverlust-Exponent an das reale Funknetzwerk angepasst. Hierdurch kann der erste digitale Zwilling jederzeit eine digitale Kopie des realen Funknetzwerks darstellen. Insbesondere umfasst der erste digitale Zwilling somit nicht nur den aktuellen Pfadverlust und/oder den Pfadverlust-Exponenten, sondern umfasst auch die Historie des jeweiligen Pfadverlusts und/oder des jeweiligen Pfadverlust-Exponenten für die entsprechenden Funkverbindungen. Somit können bei der Anpassung der Funkparameter nicht nur die aktuellen, sondern zusätzlich auch die historischen Messwerte verwendet werden. Beispielsweise kann basierend auf den aktuellen Messwerten und den historischen Messwerten ein gleitender Durchschnittswert hinsichtlich des Pfadverlustes oder des Pfad-Verlust-Exponenten gebildet werden. Hierdurch können etwaige Messfehler oder Ausreißer der aktuellen Eigenschaften des Funknetzwerks ausgeglichen werden.

Insbesondere werden weitere Signalparameter der einzelnen Funkverbindungen zwischen dem Gateway und den Funkknoten und/oder der Funkverbindungen der Funkknoten untereinander bestimmt und diese zusätzlich vom ersten digitalen Zwilling zur Anpassung des mindestens einen Funkparameters für eine zukünftige Datenübertragung mindestens einer Funkverbindung des Funknetzwerks herangezogen. Insbesondere werden die Signalparameter der jeweiligen Funkverbindungendes Funknetzwerks den entsprechenden Funkverbindungen des ersten digitalen Zwillings zugeordnet. Hierdurch kann der erste digitale Zwilling weiter an die entsprechenden Eigenschaften der Funkverbindungen des Funknetzwerks angepasst werden, wodurch die Anpassung der Funkparameter weiter verbessert wird. Zweckmäßigerweise werden die Funkparameter gefiltert und/oder geclustert, bevor diese dem ersten digitalen Zwilling zugeführt werden. Zweckmäßigerweise handelt es sich bei den Signalparametern um den Received Signal Strength Indicator (RSSI), und/oder ein Signal-Rausch-Verhältnis (SNR), und/oder eine packet error rate (PER), und/oder eine bit error rate (BER).

Vorzugsweise ist eine künstliche Intelligenz zur Vorhersage oder Schätzung eines zukünftigen Pfadverlustes und/oder eines zukünftigen Pfadverlust-Exponenten und/oder eines zukünftigen RSSI für die jeweiligen Funkverbindungen zwischen dem Gateway und den Funkknoten und/oder den Funkknoten untereinander vorgesehen. Zweckmäßigerweise werden der zukünftige Pfadverlust und/oder der zukünftige Pfadverlust-Exponent und/oder der zukünftige RSSI nur für die nächste Datenübertragung oder für einen nächsten Zeitraum, z. B. für die nächste Stunde oder die nächsten Minuten, vorhergesagt bzw. geschätzt. Die künstliche Intelligenz kann den, insbesondere aktuellen und/oder historischen, Pfadverlust und/oder den, insbesondere aktuellen und/oder historischen, Pfadverlustexponenten und/oder die, insbesondere aktuellen und/oder historischen, Signalparameter der entsprechenden Funkverbindungen, z. B. des digitalen Zwillings, verarbeiten und basierend darauf den zukünftigen Pfadverlust und/oder den zukünftigen Pfadverlust-Exponenten für eine Funkverbindung vorhersagen oder zu schätzen. Basierend auf dem zukünftigen Pfadverlust und/oder dem zukünftigen Pfadverlust-Exponent können die Funkparameter für eine zukünftige bzw. die nächste Datenübertragung besonders effektiv an die zu erwartenden oder vorhergesagten Eigenschaften der Funkverbindung angepasst werden. Die Funkparameter werden somit an die wahrscheinlichsten Eigenschaften der Funkverbindung in der Zukunft angepasst. Zweckmäßigerweise handelt es sich bei der künstlichen Intelligenz um ein Maschinenlernprogramm, also eine künstliche Intelligenz die maschinelles Lernen bzw. machine learning unterstützt. Hierdurch wird es ermöglicht, dass die künstliche Intelligenz, bzw. das Maschinenlernprogramm mit den historischen Messwerten des Pfadverlustes und/oder des Pfadverlust-Exponenten und/oder der Signalparameter trainiert werden. Zweckmäßigerweise ist die künstliche Intelligenz in der Steuerungseinrichtung des Funkknotens oder des Gateways oder des Head-Ends angeordnet und wird hierbei insbesondere von einem Prozessor bzw. Chip ausgeführt.

Indem die künstliche Intelligenz bzw. das Maschinenlernprogramm zusätzlich die zukünftige Signalleistung und/oder die zukünftige Empfangswahrscheinlichkeit vorhersagt oder schätzt, kann eine noch genauere Vorhersage der zukünftigen Eigenschaften der Funkverbindungen des Funknetzwerks getroffen werden, wodurch die Anpassung des mindestens einen Funkparameters weiter verbessert werden kann.

Dadurch, dass der zukünftige Pfadverlust und/oder der zukünftige Pfadverlust-Exponent und/oder die zukünftige Signalleistung und/oder die zukünftige Empfangswahrscheinlichkeit der jeweiligen Funkverbindungen zur Anpassung des mindestens einen Funkparameters für eine zukünftige Datenübertragung über eine Funkverbindung des Funknetzwerks verwendet bzw. herangezogen werden, kann der mindestens eine Funkparameter besonders genau an die vorhergesagten oder erwarteten Eigenschaften der Funkverbindungen des Funknetzwerks angepasst werden.

Indem die künstliche Intelligenz bzw. das Maschinenlernprogramm mit dem, insbesondere historischen, Pfadverlust und/oder dem, insbesondere historischen, Pfadverlust-Exponent und/oder den, insbesondere historischen, Signalparametern der entsprechenden Funkverbindungen trainiert wird, können bestimmte Muster und Regelmäßigkeiten der Eigenschaften der Funkverbindungen des Funknetzwerks erkannt werden, wodurch eine besonders präzise Vorhersage oder Schätzung der zukünftigen Eigenschaften der Funkverbindungen des Funknetzwerks ermöglicht wird.

Zweckmäßigerweise werden die Signalparameter vor dem Trainieren der künstlichen Intelligenz bzw. des Maschinenlernprogramms gefiltert und/oder geclustert bzw. gebündelt. Die Filterung und das Clustern können von der künstlichen Intelligenz bzw. dem Maschinenlernprogramm selbst durchgeführt werden oder die Filterung und das Clustern werden vorab, z. B. durch die Steuerungseinrichtung, durchgeführt.

Vorzugsweise beruht die Vorhersage oder Schätzung der künstlichen Intelligenz bzw. des Maschinenlernprogramms auf dem Maximum-Likelihood-Verfahren oder dem Minimum-Mean-Square-Error-Verfahren.

Indem die künstliche Intelligenz bzw. das Maschinenlernprogramm einen Zeitpunkt feststellen kann, bei welchem ein Funkknoten den geringsten Pfadverlust aufweist, können Schwankungen, insbesondere tageszeitliche Schwankungen, der Eigenschaften einer Funkverbindung des Funknetzwerks ermittelt werden. Hierbei können die Funkparameter des Funkknotens derart angepasst werden, dass dieser nur zu den Zeiten mit dem geringsten Pfadverlust sendet. Hierdurch wird einerseits sichergestellt, dass die Datenübertragungen des Funkknotens von einem Gateway empfangen werden und andererseits werden unnötige Datenübertragungen vermieden, wodurch Energie eingespart werden kann.

Insbesondere ist ein zweiter digitaler Zwilling in dem Funkknoten oder dem Gateway oder dem Head-End vorgesehen, wobei die künstliche Intelligenz den zweiten digitalen Zwilling umfasst und z. B. zur Vorhersage oder Schätzung der zukünftigen Funkeigenschaften der Funkkanäle nutzt. Der zweite digitale Zwilling umfasst alle Funkknoten und alle Gateways sowie die Funkverbindungen des Funknetzwerks. Ferner kann er, analog zum ersten digitalen Zwilling die Eigenschaften der Funkverbindungen des Funknetzwerks umfassen. Hierdurch wird erreicht, dass der erste digitale Zwilling lediglich die aktuellen Eigenschaften der Funkverbindungen des Funknetzwerks widerspiegelt und der zweite digitale Zwilling lediglich zur Vorhersage bzw. Schätzung des zukünftigen Funknetzwerks verwendet wird. Hierdurch wird eine Redundanz geschaffen.

Vorzugsweise erhält der zweite digitale Zwilling Informationen hinsichtlich des Funknetzwerkes vom ersten digitalen Zwilling. Diese Informationen umfassen z. B. den strukturellen Aufbau des Funknetzwerks und/oder die Anzahl der Funkknoten und/oder die ID der Funkknoten und/oder die Anzahl der Gateways und/oder die Identifikationsnummern der Gateways und/oder die Eigenschaften der einzelnen Funkverbindungen, insbesondere deren RSSI und/oder Pfadverlust und/oder Pfadverlust-Exponent und/oder Signalparameter.

Beispielsweise handelt es sich bei den Signalparametern um

- einen Received Signal Strength Indicator (RSSI), und/oder
- ein Signal-Rausch-Verhältnis (SNR), und/oder
- eine packet error rate (PER), und/oder
- eine bit error rate (BER).

Dadurch, dass der Funkknoten oder das Gateway vor einer Datenübertragung ein Test-Datenpaket aussendet, können die aktuellen Eigenschaften einer Funkverbindung des Funknetzwerks überprüft werden. Test-Datenpakete sind kurze Datenpakete, die keine Nutzdaten umfassen und daher nur wenig Energie beim Aussenden bzw. Empfangen verbrauchen.

Vorzugsweise findet ein Datenaustausch erst dann statt, wenn das Test-Datenpaket über eine ausreichende Qualität verfügen. Hierdurch kann sichergestellt werden, dass eine Datenübertragung lediglich dann stattfindet, wenn die Datenübertragung mit einer gewissen Wahrscheinlichkeit auch empfangen wird. Hierdurch wird erreicht, dass keine Datenübertragungen mit einer geringen Empfangswahrscheinlichkeit ausgesendet werden. Insbesondere wird die Qualität des Test-Datenpakets anhand des Pfadverlustes und/oder des Pfadverlust-Exponenten und/oder der obengenannten Signalparameter bestimmt.

Insbesondere wird die Anpassung des mindestens einen Funkparameters für eine zukünftige Datenübertragung der Funkverbindung des Funknetzwerks derart durchgeführt, dass die Empfangswahrscheinlichkeit für eine Datenübertragung über eine Funkverbindung mit einem hohen Pfadverlust erhöht wird.

Insbesondere handelt es sich bei der Datenübertragung über die Funkverbindung zwischen den Funkknoten und dem Gateway um eine unsynchronisierte Datenübertragung.

Zweckmäßigerweise ist der Funkknoten eine Sensoreinrichtung, insbesondere ein Verbrauchszähler zur Messung des Stromverbrauchs oder des Gasverbrauchs oder des Wasserverbrauchs. Alternativ kann es sich bei dem Funkknoten um eine Aktoreinrichtung zur Vornahme bestimmter Handlungen oder Maßnahmen oder um eine Kombination einer Sensoreinrichtung und einer Aktoreinrichtung handeln

Vorzugsweise umfasst der Funkknoten, insbesondere die Steuerungseinrichtung des Funkknotens, eine Neuromorphic processor unit (NCU) bzw. einen KI-Prozessor. Hierbei handelt es sich um einen Prozessor oder Chip, die für Anwendungen der künstlichen Intelligenz und/oder des maschinellen Lernens spezialisiert ist.

Zudem betrifft die Erfindung darüber hinaus eine Kommunikationseinrichtung gemäß dem Anspruch 17. Erfindungsgemäß handelt es sich bei der Kommunikationseinrichtung um einen Funkknoten oder ein Gateway oder ein Head-End, welcher/s zur Durchführung des Verfahrens nach einem der vorhergehenden Ansprüche 1-16 eingerichtet ist.

Das Head-End ist eine übergeordnete Einheit, die z. B. die im Funknetzwerk übertragenen Daten sammelt und auswertet. Das Head-End kommuniziert insbesondere mit dem Gateway und den Funkknoten.

Zweckmäßigerweise handelt es sich bei dem Gateway um einen Konzentrator oder Datensammler.

Zweckmäßigerweise kann der Funkknoten in den lizenzfreien ISM-Bändern, vorzugsweise in einem Frequenzband im Bereich von 865,0 - 868,0 MHz oder 868,0 - 868,6 MHz oder 869,4 - 869,65 MHz oder 902 - 928 MHz, betrieben werden.

Zweckmäßigerweise arbeitet der Funkknoten schmalbandig, d.h. die Signalbandbreite des Funkknotens ist kleiner als 20 kHz.

Beschreibung der Erfindung anhand von Ausführungsbeispielen

Zweckmäßige Ausgestaltungen der vorliegenden Erfindung werden anhand von Zeichnungsfiguren nachstehen näher erläutert. Es zeigen:

Fig. 1      eine stark vereinfachte Darstellung eines beispielhaften bidirektionalen Funknetzwerks;

Fig. 2a     eine stark vereinfachte schematische Darstellung eines beispielhaften Funkknotens gemäß Fig. 1;

Fig. 2b     eine stark vereinfachte schematische Darstellung eines beispielhaften Gateways gemäß Fig. 1;

Fig. 2c     eine stark vereinfachte schematische Darstellung eines beispielhaften Head-Ends gemäß Fig. 1;

Fig. 3      eine stark vereinfachte Darstellung eines ersten digitalen Zwillings des Funknetzwerks gemäß Fig. 1;

Fig. 4a     ein beispielhafter Verfahrensablauf zur Anpassung des mindestens einen Funkparameters gemäß einem ersten Ausführungsbeispiel;

Fig. 4b     eine vereinfachte schematische Darstellung des Verfahrens zur Anpassung des Funkparameters gemäß Fig. 4a;

Fig. 5      eine vereinfachte schematische Darstellung des Verfahrens zur Anpassung des Funkparameters gemäß einem zweiten Ausführungsbeispiel;

Fig. 6      eine vereinfachte schematische Darstellung des Verfahrens zur Anpassung des Funkparameters gemäß einem dritten Ausführungsbeispiel;

Fig. 7      eine vereinfachte schematische Darstellung des Verfahrens zur Anpassung des Funkparameters gemäß einem vierten Ausführungsbeispiel;

Fig. 8      ein beispielhaftes Diagramm mit zeitlichen Schwankungen des Pfadverlustes einer Funkverbindung; sowie

Fig. 9      eine vereinfachte schematische Darstellung zum Verfahrensablauf bei der Aussendung von Test-Übertragungen.

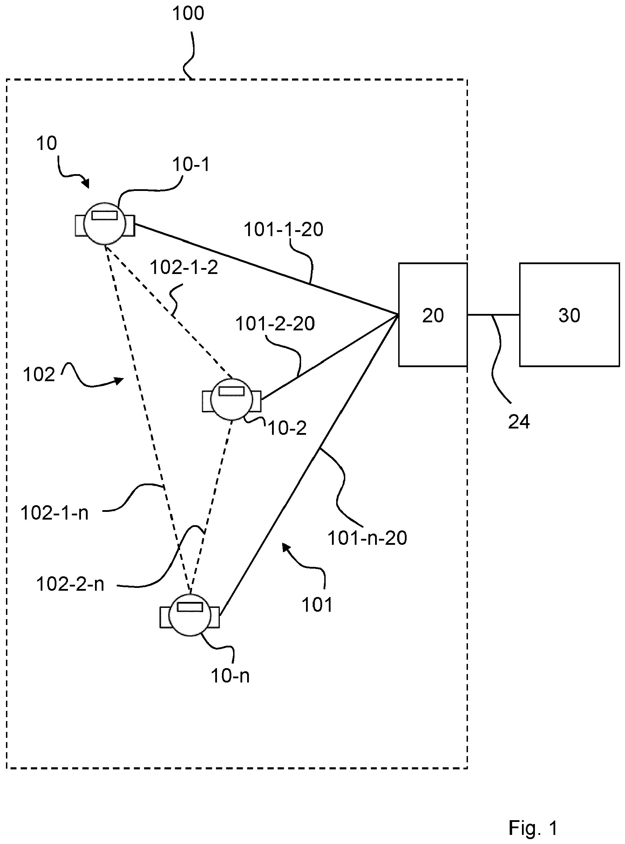

Fig. 1 zeigt eine stark vereinfachte Darstellung eines beispielhaften bidirektionalen Funknetzwerks 100. Das Funknetzwerk 100 umfasst mehrere Funkknoten 10 sowie eine Gateway 20. Das Gateway 20 kann über eine bidirektionale Verbindung 24 mit einem Funknetzwerk-externen Head-End 30 kommunizieren. Bei der Verbindung 24 kann es sich um eine Funkverbindung oder eine kabelgebundene Verbindung handeln. Die Funkknoten 10 kommunizieren über bidirektionale Funkverbindungen 101 mit dem Gateway 20. Während einer Uplink-Übertragung übermittelt ein Funkknoten 10 Daten an das Gateway 20, welches diese das Head-End 30 weiterleiten kann. In einer Downlink-Übertragung hingegen werden Daten vom Gateway 20 an den Funkknoten 10 gesendet. Das Gateway 20 kann die Downlink-Übertragung hierbei von dem Head-End 30 erhalten haben.

In dem beispielhaften Funknetzwerk 100 sind drei Funkknoten 10-1, 10-2, 10-n vorgesehen, die mit dem Gateway 20 kommunizieren. Der Funkknoten 10-1 kommuniziert über die Funkverbindung 101-1-20 mit dem Gateway 20, der Funkknoten 10-2 über die Funkverbindung 101-2-20 mit dem Gateway 20 und der Funkknoten 10-n über die Funkverbindung 101-n-20 mit dem Gateway 20. Über diese Funkverbindungen 101 sind sowohl Uplink-Übertragungen als auch Downlink-Übertragungen möglich. Es können mehr als drei Funkknoten 10 in dem Funknetzwerk 100 vorgesehen sein.

Zusätzlich können bidirektionale Funkverbindungen 102 zwischen den Funkknoten 10 untereinander vorgesehen sein. Hierbei kommuniziert der Funkknoten 10-1 über die Funkverbindung 102-1-n mit dem Funkknoten 10-n, der Funkknoten 10-1 über die Funkverbindung 102-1-2 mit dem Funkknoten 10-2 und der Funkknoten 10-2 über die Funkverbindung 101-2-n mit dem Funkknoten 10-n.

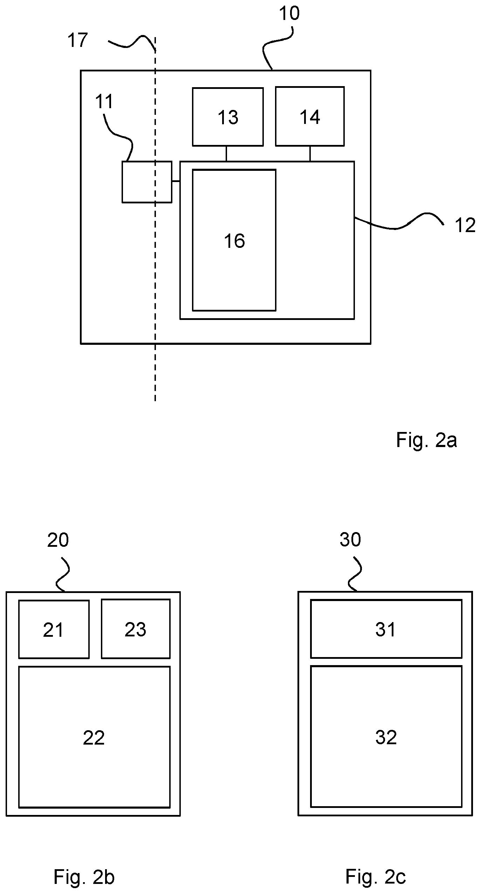

Der Funkknoten 10 wird über eine Batterie 13 mit Energie versorgt, vgl. Fig. 2. Bei der Batterie 13 kann es sich um eine Longlife-Batterie handeln. Im Normalfall kann mit einer derartigen Longlife-Batterie eine Standzeit "im Feld" von mindestens zehn Jahren erreicht werden.

Der Funkknoten 10 umfasst zudem eine Steuerungseinheit 12 sowie ein Funkmodul 14. Bei dem in Fig. 2 gezeigten Funkknoten 10 handelt es sich um eine Sensoreinrichtung zur Erfassung von Daten jeglicher Art. Hierfür umfasst der Funcknoten 10 einen an einer Versorgungsleitung 17 angeordneten Sensor 11, beispielsweise zum Erfassen eines Stromverbrauchs oder eines Flüssigkeitsdurchflusses oder Gasdurchflusses. Alternativ kann es sich bei dem Funkknoten 10 auch um eine Aktoreinrichtung zur Vornahme bestimmter Handlungen oder Maßnahmen oder um eine Kombination einer Sensoreinrichtung und einer Aktoreinrichtung handeln.

Die von dem Sensor 12 gemessenen Messdaten werden an die Steuerungseinheit 12 übertragen. Die Steuerungseinheit 12 kann die Messdaten verarbeiten oder zwischenspeichern. Der Funkknoten 10 überträgt die Messdaten mittels einer Uplink-Datenübertragung über das Funkmodul 14 und die entsprechende Funkverbindung 101 an des Gateway 20. Die Uplink-Übertragung kann von der Steuerungseinheit 12 initiiert werden.

Das Gateway 20 umfasst gemäß Fig. 2b ein Funkmodul 21 zur Funkkommunikation mit den Funkknoten 10 und ein Kommunikationsmodul 23, um mit dem Head-End 30 zu kommunizieren. Alternativ kann lediglich ein Kommunikationsmodul zur Kommunikation mit den Funkknoten 10 und dem Head-End 30 vorgesehen sein. Ferner ist eine Steuerungseinheit 22 zur Steuerung des Gateways 20 vorgesehen. Das Gateway 20 empfängt z. B. die Messdaten der Funkknoten 10 und leitet diese an das Head-End 30 weiter. Hierbei kann das Gateway z. B. die Messdaten mehrerer Funkknoten 10 bündeln und diese gemeinsam an das Head-End 30 weiterleiten.

Das Head-End 30 umfasst nach Fig. 2c ein Kommunikationsmodul 31, um z. B. mit dem Gateway 20 zu kommunizieren. Ferner umfasst das Head-End 30 eine Steuerungseinheit 32, welche z. B. die Messdaten der Funkknoten verarbeitet und abspeichert. Die Steuerungseinheit 32 kann insbesondere Verbrauchsabrechnungen basierend auf den Messdaten erstellen. Die Verbrauchsabrechnungen können anschließend z. B. an einen Versorger übertragen werden.

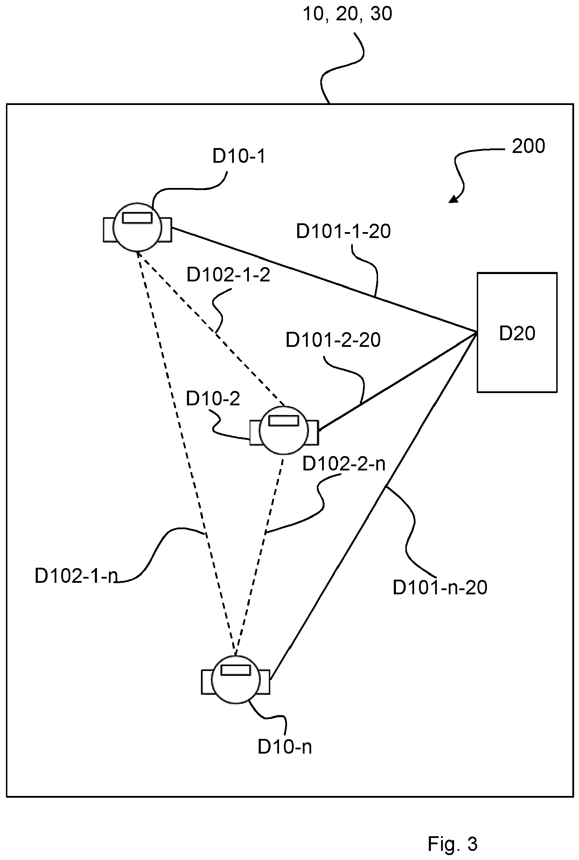

In dem Funkknoten 10, dem Gateway 20 oder dem Head-End 30 ist ein erster digitaler Zwilling D100 des Funknetzwerks 100 vorgesehen, vgl. Fig. 3. Der erste digitale Zwilling D100 ist hierbei ein digitales Abbild des Funknetzwerks 100. Infolgedessen sind alle Funkverbindungen 101 zwischen den Funkknoten 10 und dem Gateway 20 als digitale Funkverbindungen D101 vorgesehen. Ferner können die Funkverbindungen 102 zwischen den Funkknoten 10 untereinander als digitale Funkverbindung D102 vorgesehen sein. Der erste digitale Zwilling D100 kann hierbei in den Steuerungseinheiten 12, 22, 32 der entsprechenden Kommunikationseinrichtung, also dem Funkknoten 10, dem Gateway 20 oder dem Head-End 30, angeordnet sein und von diesem gesteuert bzw. verwaltet werden.

Die Datenübertragungen zwischen den Funkknoten 10 und dem Gateway 20 findet in der Regel unsynchronisiert statt. Dies bedeutet, dass z. B. die Uplink-Übertragungen der Funkknoten 10 nicht synchronisiert sind und diese somit gleichzeitig ausgesendet werden können. Hierdurch können sich verschiedene Uplink-Übertragungen unterschiedlicher Funkknoten 10 gegenseitig überlagern und stören, sodass die Übertragungsqualität der Uplink-Übertragungen deutlich reduziert wird. Insbesondere überlagert das Funksignal eines Funkknotens 10-2, welcher näher am Gateway 20 positioniert ist, die Funksignale eines Funkknotens 10-1, welcher weiter entfernt vom Gateway 20 angeordnet ist. Die Überlagerungen können bereits dadurch bedingt werden, dass das Funksignal des näher positionierten Funcknotens 10-2 am Gateway 20 eine höhere Energie aufweisen, als das Funksignale des weiteren entfernten Funkknotens 10-1. Dies kann zur Folge haben, dass Uplink-Übertragung einzelner Funkknoten 10 nicht mehr vom Gateway 20 empfangen werden.

Erfindungsgemäß wird für die jeweiligen Funkverbindungen 101 zwischen den Funkknoten 10 und dem Gateway 20 der Received Signal Strength Indicator RSSI bestimmt und basierend darauf mindestens ein Funkparameter für eine zukünftige Datenübertragung der entsprechenden Funkverbindung 101 angepasst. Funkparameter sind insbesondere die Sendeleistung und/oder die Länge und/oder die Anzahl der Wiederholungen und/oder Sendeintervalle und/oder Datenraten und/oder Frequenzkanäle und/oder der Sendezeitpunkt einer Datenübertragung, also einer Uplink-Übertragung und/oder einer Downlink-Übertragung. Hierdurch kann die Empfangswahrscheinlichkeit einer Funkverbindung 101 und die Qualität der Datenübertragung erhöht werden. Insbesondere kann hierdurch erreicht werden, dass die Funkparameter der Funkknoten 10 derart verändert werden, dass sich die Empfangswahrscheinlichkeit von Uplink-Übertragungen eines entfernt vom Gateway 20 angeordneten Funkknoten 10-1 erhöht.

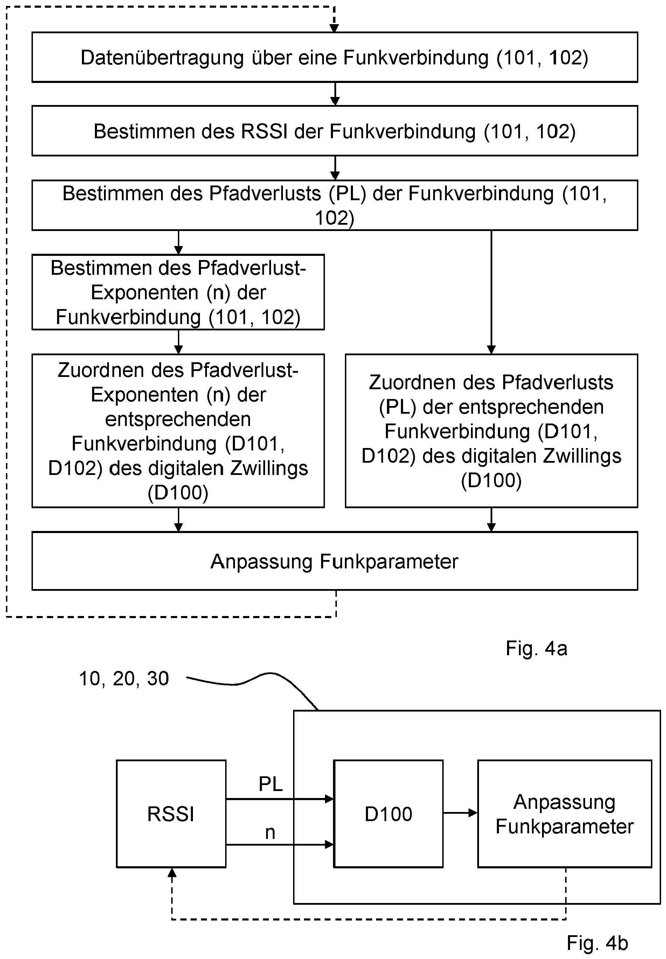

Fig. 4a zeigt das erfindungsgemäße Verfahren zur Anpassung des mindestens einen Funkparameters gemäß einem ersten Ausführungsbeispiel. Zunächst findet eine Datenübertragung über eine Funkverbindung 101, 102 statt, z. B. eine Uplink-Übertragung von dem Funkknoten 10-1 an das Gateway 20 über die Funkverbindung 101-1-20. Ausgehend von dieser Datenübertragung wird der RSSI der Funkverbindung 101-1-20 bestimmt. Der RSSI ist eine Verhältniszahl und stellt einen Indikator für die Empfangsfeldstärke kabelloser Kommunikationsanwendungen dar. Ausgehend von dem RSSI der Funkverbindung 101-1-20 wird der Pfadverlust PL für die Funkverbindung 101-1-20 bestimmt oder geschätzt. Der Pfadverlust PL gibt die Dämpfung der Funkverbindung 101-1-20 an und berechnet sich z. B. nach der Formel:

$$PL = PL(d_0) + 10\, n \log\left(\frac{d}{d_0}\right)$$

Hierbei ist n der Pfadverlust-Exponent, d ist die Pfadlänge zwischen dem Funcknoten 10-1 und dem Gateway 20, $d_0$ ist eine Referenzdistanz, z. B. 1 km für große Funknetzwerke, und PL($d_0$) ist der Pfadverlust in Dezibel (dB) für die Referenzdistanz da.

Ausgehend von dem Pfadverlust PL kann zusätzlich der Pfadverlust-Exponent n bestimmt werden, welcher Auskunft über den Standort des Funkknotens 10-1 geben kann. Hierbei bedeutet ein Pfadlust-Exponent n von 4 bis 5, dass sich der Funkknoten 10-1 in einer Großstadt befindet, welcher viele Störer aufweist. Ferner bedeutet ein Pfadverlust-Exponent n von ungefähr 3, dass sich der Funkknoten 10-1 in einer Kleinstadt bzw. einer ländlichen Region mit wenigen Störern angeordnet ist. Ein Pfadverlust-Exponent n von 2 bedeutet hingegen, dass keine Störer vorhanden sind. So bedeutet ein höherer Pfadverlust-Exponent n, dass viele Störer oder Hindernisse in der Funkverbindung 101-1-20 vorhanden sind.

Dasselbe wird für die weiteren Funkverbindungen 101-2-20, 101-n-20 des Funknetzwerks 100 durchgeführt, sodass der RSSI und der Pfadverlust PL für die Funkverbindungen 101-2-20, 101-n-20 , vorzugsweise für alle Funkverbindungen 101, zwischen dem Gateway 20 und den Funkknoten 10, vorliegen. Die Bestimmung des RSSI und/oder des Pfadverlustes PL kann z. B. von der Kommunikationseinrichtung durchgeführt werden, die die Datenübertragung der betreffenden Funkverbindung 101, 102 empfängt, also im Falle einer Uplink-Übertragung das Gateway 20 bzw. im Falle einer Downlink-Übertragung der Funkknoten 10. Alternativ kann die Bestimmung des RSSI und/oder des Pfadverlustes PL auch von der Kommunikationseinrichtung durchgeführt werden, welche dem ersten digitalen Zwilling D100 umfasst.

Im Folgenden wird beispielhaft beschrieben, dass der erste digitale Zwilling D100 im Head-End 30 angeordnet ist. Allerdings sei darauf hingewiesen, dass der erste digitale Zwilling auch im Gateway 20 oder in einem Funkknoten 10 angeordnet sein kann. Der Pfadverlust PL und/oder der Pfadverlust-Exponent n der einzelnen Funkverbindungen 101 werden an das Head-End 30 übertragen. Diese werden vom Head-End 30 den entsprechenden Funkverbindungen D101-1-20, D101-2-20, D101-n-20 des ersten digitalen Zwillings D100 zugeordnet, sodass deren Eigenschaften denen der Funkverbindungen 101-1-20, 101-2-20, 101-n-20 des Funknetzwerks 100 entsprechen.

Zusätzlich kann der RSSI auch für die jeweiligen Funkverbindungen 102 zwischen den Funkknoten 10 bestimmt oder geschätzt werden. Ausgehend von dem RSSI kann somit der entsprechende Pfadverlust PL und/oder Pfadverlust-Exponent n für diese Funkverbindungen 102 bestimmt oder geschätzt werden und analog zu dem beschriebenen Verfahren für die Funkverbindungen 101 dem ersten digitalen Zwilling D100 zugeführt werden. Infolgedessen umfasst der erste digitale Zwilling D100 zusätzlich die Funkverbindungen D102 mit den entsprechenden Funkverbindungen D102-1-n, D102-1-2, D102-2-n. Diesen Funkverbindungen D102-1-n, D102-1-2, D102-2-n des ersten digitalen Zwillings D100 sind ebenfalls der Pfadverlust PL und/oder der Pfadverlust-Exponent n der dazugehörigen Funkverbindung 102-1-n, 102-1-2, 102-2-n des Funknetzwerks 100 zugeordnet.

Ausgehend von den Eigenschaften der Funkverbindungen D101 und/oder der Funkverbindungen D102 des ersten digitalen Zwillings D100 passt das Head-End 30 mindestens einen Funkparameter für eine zukünftige Datenübertragung mindestens einer Funkverbindung 101 des Funknetzwerks 100 an. Hierbei werden die Funkparameter der einzelnen Funkverbindungen 101 derart angepasst, dass die Empfangswahrscheinlichkeit von Datenübertragungen von entfern zum Gateway 20 angeordneten Funkknoten 10-1 erhöht wird, z. B. indem störende Funkknoten 10-2 angewiesen werden keine Datenübertragung durchzuführen. Hierfür erhalten die Funkknoten 10 und/oder das Gateway 20 die entsprechenden Funkparameter von dem Head-End 30 zugewiesen.

Zusammenfassend wird basierend auf dem RSSI der Funkverbindungen 101, 102 der entsprechende Pfadverlust PL und/oder Pfadverlust-Exponent n der jeweiligen Funkverbindungen 101, 102 bestimmt, welche beide den entsprechend Funkverbindungen D101, D102 des ersten digitalen Zwillings D100 zugewiesen werden. Basierend auf den Eigenschaften der Funkverbindungen D101, D102 des ersten digitalen Zwillings D100 wird nunmehr die Anpassung des mindestens einen Funkparameters durchgeführt, vgl. Fig. 4b.

Die Anpassung des mindestens einen Funkparameters für die Datenübertragungen hat zur Folge, dass sich auch der RSSI der einzelnen Funkverbindungen 101, 102 ändern. Infolgedessen kann der RSSI der einzelnen Funkverbindungen 101, 102 nach der Anpassung des mindestens einen Funkparameters erneut bestimmt werden und basierend drauf über das oben beschriebene Verfahren die Funkparameter erneut angepasst werden. Hierdurch entsteht zweckmäßigerweise eine Art Kreislauf, bei welchem die Funkparameter fortlaufen über das oben beschriebene Verfahren an die aktuellen RSSI der Funkverbindungen 101, 102 angepasst werden. Dieser Kreislauf wird durch die gestrichelten Linien in Fig. 4a und 4b verdeutlicht. Hierdurch wird eine fortlaufende Anpassung des mindestens einen Funkparameters an die sich Ändernden Eigenschaften der Funkverbindungen 101, 102 erreicht.

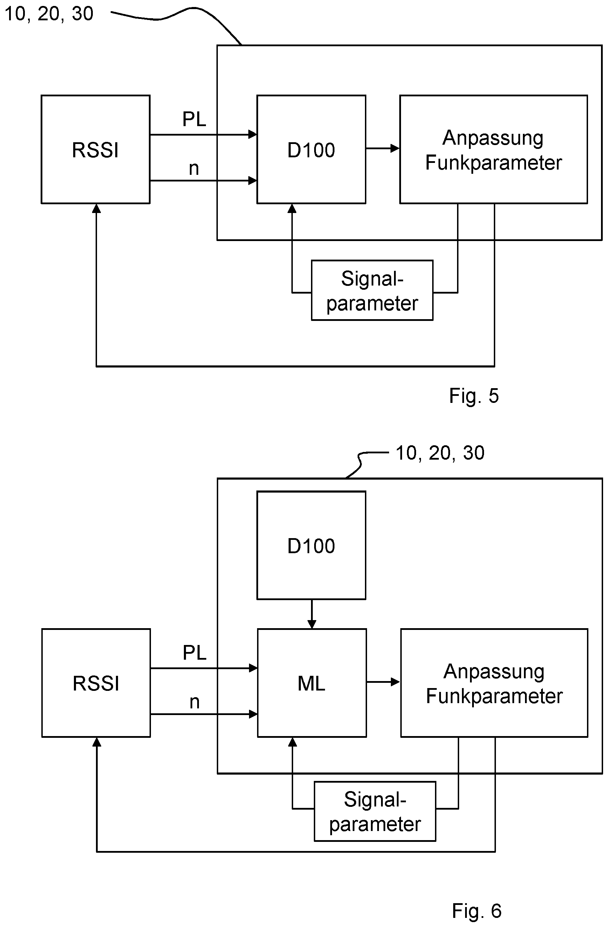

Zusätzlich können zu dem Pfadverlust PL und dem Pfadverlust-Exponenten n können den Funkverbindungen D101, D102 des ersten digitalen Zwillings D100 weitere Signalparameter der Funkverbindungen 101, 102 des Funknetzwerks 100 zugeordnet werden, wie dies in dem zweiten Ausführungsbeispiel nach Fig. 5 gezeigt ist. Bei diesen Signalparametern handelt es sich beispielsweise um den Received Signal Strength Indicator (RSSI), und/oder das Signal-Rausch-Verhältnis (SNR), und/oder die packet error rate (PER), und/oder die bit error rate (BER) der entsprechenden Funkverbindung 101, 102. Hierdurch spiegelt der erste digitale Zwilling D100 das Funknetzwerk 100 genauer wider, sodass die Anpassung des mindestens einen Funkparameters weiter verbessert werden kann. Die Anpassung der Funkparameter beeinflusst sowohl die Signalparameter als auch den Pfadverlust PL und den Pfadverlust-Exponenten n der einzelnen Funkverbindungen 101, 102. Auch bei diesem Ausführungsbeispiel können die Funkparameter fortlaufend aktualisiert werden, wie oben beschreiben.

Insbesondere werden der Pfadverlust PL und/oder der Pfadverlust-Exponent n und/oder die Signalparameter der Funkverbindungen 101, 102 des Funknetzwerks 100 den entsprechenden Funkverbindungen D101, D102 des digitalen Zwillings D100 fortlaufen zugeordnet bzw. abgespeichert, sodass der erste digitale Zwilling D100 sowohl die aktuellen Eigenschaften des Funknetzwerks 100 also auch die historischen Eigenschaften des Funknetzwerks 100 widerspiegeln kann. Somit kann beispielsweise ein gleitender Durchschnitt des Pfadverlusts PL und/oder der Pfadverlust-Exponenten n und/oder die Signalparameter gebildet werden, sodass Ausreißer und oder Messfehler weniger Gewicht bei der Anpassung der Funkparameter erlangen. Basierend auf den aktuellen und historischen Eigenschaften kann die Anpassung des mindestens einen Funkparametes durchgeführt werden

Gemäß einem dritten Ausführungsbeispiel ist zusätzlich zu dem ersten digitalen Zwilling D100 eine künstliche Intelligenz, insbesondere ein Maschinenlernprogramm ML vorgesehen, vgl. Fig. 6. Das Maschinenlernprogramm ML ist ebenfalls in der Kommunikationseinrichtung mit dem digitalen Zwillings D100 angeordnet und wird vorzugsweise von einem Prozessor oder einem Chip ausgeführt.

Somit kann das Maschinenlernprogramm auf der Steuerungseinheit 32 des Head-Ends, der Steuerungseinheit 12 des Funkknotens 10 oder der Steuerungseinheit 22 des Gateways 20 angeordnet sein. Der Funkknoten 10 umfasst in diesem Fall zweckmäßigerweise einen Neuromorphic processor unit (NCU) 16 bzw. eine KI-Chip. Dieser ermöglicht es dem Funkknoten 10 trotz der typischerweise begrenzten Rechenkapazität und/oder Energiekapazität des Funkknotens 10 eine ausreichende Rechenleistung für das Maschinenlernprogramm ML.

Das Maschinenlernprogramm ML wird hierbei mit dem Pfadverlust PL und/oder dem Pfadverlust-Exponenten n und/oder den Signalparametern, insbesondere mit den entsprechenden aktuellen und historischen Daten, der einzelnen Funkverbindungen 101, 102 trainiert. Hierbei umfasst das Maschinenlernprogramm ML z. B. ein statistisches Modell, das die Eingaben beschreibt und daraus Kategorien und Zusammenhänge erkennt. Zweckmäßigerweise werden die Signalparameter vor dem Trainieren des Maschinenlernprogramms ML gefiltert und/oder geclustert bzw. gebündelt. Infolgedessen können Vorhersagen für die zukünftigen Eigenschaften der Funkverbindungen 101, 102 des Funknetzwerks 100 getroffen werden.

Das Maschinenlernprogramm ML kann, insbesondere nach dem Trainiervorgang, zur Vorhersage oder Schätzung der zukünftigen Eigenschaften, also des zukünftigen Pfadverlustes PL und/oder eines zukünftigen Pfadverlust-Exponenten n und/oder eines zukünftigen RSSI und/oder zukünftige Signalleistung und/oder die zukünftige Empfangswahrscheinlichkeit, der Funkverbindungen 101, 102 des Funknetzwerks 100 verwendet werden.

Hierbei erhält das Maschinenlernprogramm ML zum einen Informationen bezüglich der Eigenschaften der Funkverbindungen 101, 102 des Funknetzwerks 100 von dessen ersten digitalen Zwillings D100 und andererseits den aktuellen Pfadverlust PL und/oder den aktuellen Pfadverlust-Exponenten n und/oder weitere aktuelle Signalparameter der Funkverbindungen 101, 102 des Funknetzwerks 100. Zweckmäßigerweise wird der erste digitale Zwilling D100, wie oben beschrieben, fortlaufend aktualisiert und umfasst auch historische Werte zu den Pfadverlusten PL und/oder den Pfadverlust-Exponenten n und/oder weiteren Signalparametern. Alternativ kann der digitale Zwilling D100 lediglich die Eigenschaften des Funknetzwerks 100 bei dessen Initialisierung widerspiegeln.

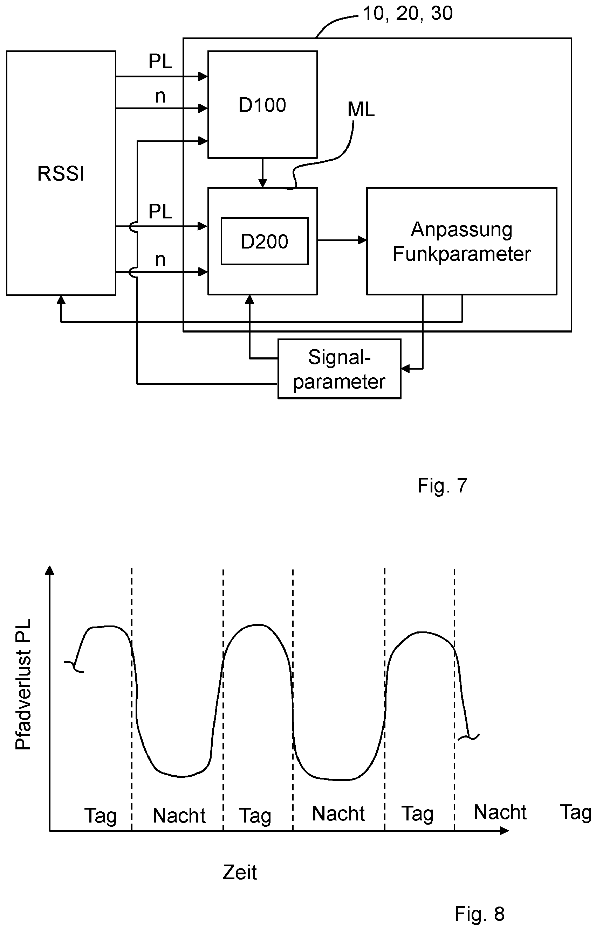

Alternativ kann das Maschinenlernprogramm ML einen zweiten digitalen Zwilling D200 umfasst, der wie der erste digitale Zwilling D100 ein digitales Abbild bzw. Modell des Funknetzwerks 100 umfasst, vgl. Fig. 7. Hierbei kann das Maschinenlernprogramm ML Informationen bezüglich der Eigenschaften der Funkverbindungen 101, 102 vom dem digitalen Zwilling D100 erhalten und zugleich die aktuellen Pfadverluste und/oder die aktuellen Pfadverlust-Exponenten n und/oder weitere aktuelle Signalparameter der Funkverbindungen 101, 102 des Funknetzwerks 100 erhalten. Zweckmäßigerweise wird der erste digitale Zwilling D100, wie oben beschrieben, fortlaufend aktualisiert und umfasst auch historische Werte zu den Pfadverlusten PL und/oder den Pfadverlust-Exponenten n und/oder weiteren Signalparametern. Alternativ kann der digitale Zwilling D100 lediglich die Eigenschaften des Funknetzwerks 100 bei dessen Initialisierung widerspiegeln. Das Maschinenlernprogramm ML führt die zugeführten Daten dem zweiten digitalen Zwilling D200 zu und verwendet diesen für weitere Berechnungen.

Ausgehend von den zugeführten Daten ermittelt das Maschinenlernprogramm ML gemäß Figuren 6 und 7 die wahrscheinlichsten Eigenschaften der Funkverbindungen 101, 102 in der Zukunft, insbesondere für die nächste Datenübertragung. Zweckmäßigerweise beruht die Vorhersage oder Schätzung des Maschinenlernprogramms ML auf dem Maximum-Likelihood-Verfahren oder dem Minimum-Mean-Square-Error-Verfahren.

Die vorhergesagten bzw. geschätzten zukünftigen Eigenschaften der Funkverbindungen 101, 102 werden anschließend zur Anpassung des mindestens einen Funkparameters für eine zukünftige Datenübertragung mindestens einer Funkverbindung 101 des Funknetzwerks 100 herangezogen werden. Hierdurch werden die Funkparameter vorab an die wahrscheinlichsten Eigenschaften der Funkverbindungen 101, 102 des Funknetzwerks 100 angepasst, sodass die Empfangswahrscheinlichkeit und/oder die Empfangsqualität der einzelnen Funkknoten 10 weiter erhöht wird. Zweckmäßigerweise handelt es sich bei der zukünftigen Datenübertragung um die nächste Datenübertragung.

Es kann insbesondere von Vorteil sein, wenn mittels des Maschinenlernprogramms ML zeitliche Schwankungen des Pfadverlustes PL ermittelt werden können. Fig. 8 zeigt beispielhaft Schwankungen des Pfadverlusts PL eines Funkknotens 10 über mehrere Tage. Hierbei ist ersichtlich, dass der Pfadverlust PL unter Tags höher ist als nachts, also die Funkverbindung 101 tagsüber stärker gedämpft wird. Dies kann beispielsweise auf ein stärkeres Verkehrsaufkommen tagsüber zurückgeführt werden, wodurch die Funkverbindung 101 auf mehr Hindernisse bzw. auf mehr Störer stößt. Derartige zeitliche Schwankungen können mittels dem Maschinenlernprogramm ML ermittelt werden.

Basierend darauf können die Funkparameter derart angepasst werden, dass beispielsweise der Funkknoten 10 tagsüber, also während eines hohen Pfadverlustes PL, keine Uplink-Übertragungen aussendet bzw. diese öfter wiederholt. Zu dem Zeitpunkt, wenn z. B. der Funkknoten 10-1 wahrscheinlich einen geringeren Pfadverlust PL aufweist, kann der Funkknoten 10-1 angewiesen werden, seine Uplink-Übertragungen durchzuführen. Zweckmäßigerweise kann zudem die Funkaktivität von benachbarten Funkknoten 10-2, 10-n reduziert, dass die Funkverbindung 101-1-20 des Funkknotens 10-1 möglichst wenig Störer aufweist.

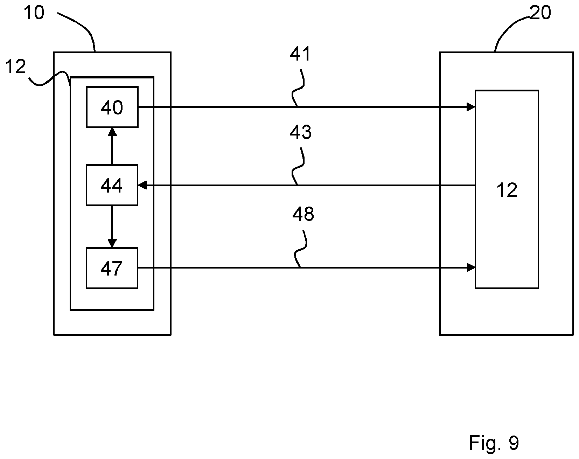

Zweckmäßigerweise kann ein Funkknoten 10 vor einer Uplink-Übertragung zusätzlich eine Test-Übertragung 41 durchführen, vgl. Fig. 9. Hierbei löst der Funcknoten 10, z. B. zu dem Zeitpunkt mit einem geringen Pfadverlust PL, eine Test-Übertragung 41 aus, Schritt 40, die vom Gateway 20 empfangen wird. Das Gateway 20 ermittelt die Qualität der Test-Übertragung 41, z. B. anhand der oben beschriebenen Signalparameter, und Übermittelt die Qualität der Test-Übertragung 41 in einer Antwort 43 an den Funkknoten 10 zurück. Der Funkknoten 10 überprüft die Qualität der Test-Übertragung 41 anhand der Übermittelten Antwort 43.

Ist die Qualität der Test-Übertragung 41 gemäß der Antwort 43 nicht ausreichend bzw. wird keine Antwort 43 empfangen, z. B. weil die Test-Übertragung 41 nicht vom Gateway 2 empfangen wurde, wird erneut eine Test-Übertagung 41 ausgesendet oder das Aussenden von Test-Übertragungen 41 ausgesetzt.

Ist die Qualität der Test-Übertragung 41 ausreichen, wird die Datenübertragung 48 ausgelöst, Schritt 47, und die Daten an das Gateway 20 mittels einer Uplink-Übertragung übersendet.

Hierdurch können in einfacher Weise die Eigenschaften der Funkverbindung 101 getestet werden. Infolgedessen wird erst bei einer ausreichenden Empfangswahrscheinlichkeit eine Datenübertragung ausgelöst. Hierdurch kann auf Seiten des Funkknotens 10 Energie gespart werden, da unnötige Datenübertragungen nicht ausgesendet werden.

**BEZUGSZEICHENLISTE**

| | |
|---|---|
| 10-1 | Funkknoten |
| 10-2 | Funkknoten |
| 10-n | Funkknoten |
| 11 | Sensor |
| 12 | Steuerungseinheit |
| 13 | Batterie |
| 14 | Funkmodul |
| 16 | Neuromorphic processor unit (NCU) |
| 17 | Versorgungsleitung |
| 20 | Datensammler |
| 21 | Funkmodul |
| 22 | Steuerungseinheit |
| 23 | Kommunikationsmodul |
| 24 | Verbindung |
| 30 | Head-end |
| 31 | Kommunikationsmodul |
| 32 | Steuerungseinheit |
| 40 | Auslösung einer Test- Übertragung |
| 41 | Test-Übertragung |
| 43 | Antwort |

44 Überprüfung der Response
47 Auslösen einer Datenübertragung
48 Datenübertragung

100 Funknetzwerk
101 Funkverbindung
101-1-20 Funkverbindung
101-2-20 Funkverbindung
101-n-20 Funkverbindung
102 Funkverbindung
102-1-2 Funkverbindung
102-2-n Funkverbindung
102-1-n Funkverbindung

D100 Digitaler Zwilling
D101-1-20 Funkverbindung
D101-2-20 Funkverbindung
D101-n-20 Funkverbindung
D102-1-2 Funkverbindung
D102-2-n Funkverbindung
D102-1-n Funkverbindung

D200 Digitaler Zwilling

**Patentansprüche**

1. Verfahren zur Anpassung von Funkparametern innerhalb eines bidirektionalen Funknetzwerks (100) umfassend eine Vielzahl von Funkknoten (10) sowie mindestens ein Gateway (20),

   wobei Funkverbindungen (101) zwischen dem Gateway (20) und den Funkknoten (10) vorgesehen sind,
   wobei das Funknetzwerk (100) als erster digitaler Zwilling (D100) in dem Funkknoten (10) oder dem Gateway (20) oder in einem Funknetzwerk-externen Head-End (30) vorgesehen ist,
   wobei der jeweilige Received Signal Strength Indicator (RSSI) der Funkverbindungen (101) bestimmt oder geschätzt wird und wobei ausgehend von dem jeweiligen RSSI der Pfadverlust (PL) der entsprechenden Funkverbindungen (101) bestimmt oder geschätzt wird,
   wobei der jeweilige Pfadverlust (PL) der Funkverbindungen (101) den entsprechenden Funkverbindungen (D101) des ersten digitalen Zwillings (D100) zugeordnet wird, und
   wobei ausgehend von dem jeweiligen Pfadverlust (PL) der Funkverbindungen (D101) des ersten digitalen Zwillings (D100) mindestens ein Funkparameter für eine zukünftige Datenübertragung mindestens einer Funkverbindung (101) des Funknetzwerks (100) angepasst wird.

2. Verfahren nach Anspruch 1, **dadurch gekennzeichnet, dass** das Funknetzwerk (100) zusätzlich Funkverbindungen (102) zwischen den Funcknoten (10) umfasst,

   wobei der jeweilige RSSI der Funkverbindungen (102) bestimmt oder geschätzt wird und wobei ausgehend von dem jeweiligen RSSI der Pfadverlust (PL) der entsprechenden Funkverbindung (102) bestimmt oder geschätzt wird, und
   wobei der jeweilige Pfadverlust (PL) der Funkverbindungen (102) den entsprechenden Funkverbindungen (D102) des ersten digitalen Zwillings (D100) zugeordnet wird, und
   wobei die jeweiligen Pfadverluste (PL) der Funkverbindungen (D102) des ersten digitalen Zwillings (D100) zusätzlich zur Anpassung des mindestens einen Funkparameters für eine zukünftige Datenübertragung mindestens einer Funkverbindung (101) des Funknetzwerks (100) herangezogen werden.

3. Verfahren nach Anspruch 1 oder 2, **dadurch gekennzeichnet, dass** der Pfadverlust-Exponent (n) der einzelnen Funkverbindungen (101, 102) bestimmt oder geschätzt wird, wobei insbesondere vorgesehen ist, dass der mindestens eine Funkparameter für eine zukünftige Datenübertragung der mindestens einen Funkverbindung (101) zusätzlich in Abhängigkeit des Pfadverlust-Exponenten (n) angepasst wird.

4. Verfahren nach einem der vorhergehenden Ansprüche, **dadurch gekennzeichnet, dass** der Pfadverlust (PL) und/oder der Pfadverlust-Exponent (n) basierend auf dem jeweils aktuellen RSSI der entsprechenden Funkverbindung (101, 102) fortlaufend aktualisiert werden.

5. Verfahren nach einem der vorhergehenden Ansprüche, **dadurch gekennzeichnet, dass** der jeweilige Pfadverlust (PL) und/oder der jeweilige Pfadverlust-Exponent (n) der Funkverbindungen (101, 102) den entsprechenden Funkverbindungen (D101, D102) des ersten digitalen Zwillings (D100) fortlaufend zugeordnet werden.

6. Verfahren nach einem der vorhergehenden Ansprüche, **dadurch gekennzeichnet, dass** weitere Signalparameter der einzelnen Funkverbindungen (102, 102) bestimmt werden und diese zusätzlich zur Anpassung des mindestens einen Funkparameters für eine zukünftige Datenübertragung mindestens einer Funkverbindung (101) des Funknetzwerks (100) herangezogen werden.

7. Verfahren nach einem der vorhergehenden Ansprüche, **dadurch gekennzeichnet, dass** eine künstliche Intelligenz, insbesondere ein Maschinenlernprogramm (ML), zur Vorhersage oder Schätzung eines zukünftigen Pfadverlustes (PL) und/oder eines zukünftigen Pfadverlust-Exponenten (n) und/oder eines zukünftigen RSSI für die jeweiligen Funkverbindungen (101, 102) vorgesehen ist, wobei insbesondere vorgesehen ist, dass die künstliche Intelligenz zusätzlich die zukünftige Signalleistung und/oder die zukünftige Empfangswahrscheinlichkeit vorhersagt oder schätzt.

8. Verfahren nach Anspruch 7, **dadurch gekennzeichnet, dass** der zukünftige Pfadverlust (PL) und/oder der zukünftige Pfadverlust-Exponent (n) und/oder die zukünftige Signalleistung und/oder die zukünftige Empfangswahrscheinlichkeit der jeweiligen Funkverbindungen (101, 102) zur Anpassung des mindestens einen Funkparameters für eine zukünftige Datenübertragung mindestens einer Funkverbindung (101) des Funknetzwerks (100) herangezogen werden.

9. Verfahren nach Anspruch 7 oder 8, **dadurch gekennzeichnet, dass** die künstliche Intelligenz mit dem Pfadverlust (PL) und/oder dem Pfadverlust-Exponent (n) und/oder den Signalparametern der entsprechenden Funkverbindung (101, 102) trainiert wird und/oder

dass die Signalparameter vor dem Trainieren der künstlichen Intelligenz gefiltert und/oder geclustert werden und/oder
dass die Vorhersage oder Schätzung der künstlichen Intelligenz auf dem Maximum-Likelihood-Verfahren oder dem Minimum-Mean-Square-Error-Verfahren beruht und/oder
dass die künstliche Intelligenz einen Zeitpunkt bestimmen kann, bei welchem ein Funkknoten (10) den geringsten Pfadverlust (PL) aufweist.

10. Verfahren nach einem der Ansprüche 7-9, **dadurch gekennzeichnet, dass** ein zweiter digitaler Zwilling (D200) in dem Funkknoten (10) oder dem Gateway (20) oder dem Head-End (30) vorgesehen ist und die künstliche Intelligenz den zweiten digitalen Zwilling (D200) umfasst, wobei insbesondere vorgesehen ist, dass der zweite digitale Zwilling (D200) Informationen hinsichtlich des Funknetzwerks (100) vom ersten digitalen Zwilling (D100) erhält.

11. Verfahren nach einem der Ansprüche 5-10, **dadurch gekennzeichnet, dass** es sich bei den Signalparametern um

- einen Received Signal Strength Indicator (RSSI), und/oder
- ein Signal-Rausch-Verhältnis (SNR), und/oder
- eine packet error rate (PER), und/oder
- eine bit error rate (BER)

handelt.

12. Verfahren nach einem der vorhergehenden Ansprüche, **dadurch gekennzeichnet, dass** der Funkknoten (10) oder das Gateway (20) vor einer Datenübertragung eine Test-Übertragung (41) aussenden, wobei insbesondere vorgesehen ist, dass eine Datenübertragung stattfindet, wenn die Test-Übertragung (41) über eine ausreichende Qualität verfügt.

13. Verfahren nach einem der vorhergehenden Ansprüche, **dadurch gekennzeichnet, dass** die Anpassung des mindestens einen Funkparameters für eine zukünftige Datenübertragung der mindestens einen Funkverbindung (101) des Funknetzwerks (100) derart durchgeführt wird, dass die Empfangswahrscheinlichkeit für eine Datenübertragung über eine Funkverbindung (101, 102) mit einem hohen Pfadverlust (PL) erhöht wird.

14. Verfahren nach einem der vorhergehenden Ansprüche, **dadurch gekennzeichnet, dass** über die Funkverbindungen (101) eine unsynchronisierte Datenübertragung stattfindet.

15. Verfahren nach einem der vorhergehenden Ansprüche, **dadurch gekennzeichnet, dass** es sich bei dem Funkknoten (10) um eine Sensoreinrichtung und/oder eine Aktoreinrichtung handelt.

16. Verfahren nach einem der vorhergehenden Ansprüche, **dadurch gekennzeichnet, dass** der Funkknoten (10) eine Neuromorphic processor unit (NCU) (16) umfasst.

17. Kommunikationseinrichtung (10, 20, 30),

wobei es sich bei der Kommunikationseinrichtung (10, 20, 30) um einen Funkknoten (10) oder ein Gateway (20) oder ein Head-End (30) handelt, **dadurch gekennzeichnet, dass** die Kommunikationseinrichtung (10, 20, 30) zur Durchführung des Verfahrens nach einem der vorhergehenden Ansprüche 1-16 eingerichtet ist.

Fig. 1

Fig. 2a

Fig. 2b

Fig. 2c

Fig. 3

Fig. 4a

Fig. 4b

10, 20, 30

Fig. 5

10, 20, 30

Fig. 6

10, 20, 30

PL

n

RSSI

D100

ML

PL

n

D200

Anpassung
Funkparameter

Signalparameter

Fig. 7

Pfadverlust PL

Tag | Nacht | Tag | Nacht | Tag | Nacht | Tag

Zeit

Fig. 8

Fig. 9

Europäisches
Patentamt

European
Patent Office

Office européen
des brevets

# EUROPÄISCHER RECHERCHENBERICHT

**Nummer der Anmeldung**

EP 24 17 6135

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | US 2021/345134 A1 (OTTERSTEN JOHAN [SE] ET AL) 4. November 2021 (2021-11-04) <br> * Absatz [0063] - Absatz [0068] * <br> * Absatz [0076] * <br> * Absatz [0080] - Absatz [0084] * <br> * Absatz [0096] - Absatz [0109] * <br> * Abbildung 1 * <br> ----- | 1-9,11, 13-15,17 | INV. <br> H04W24/02 <br> H04B17/391 |
| Y | CN 115 829 467 A (UNIV QILU NORMAL) 21. März 2023 (2023-03-21) <br> * Seite 3 * <br> * Seite 7 * <br> ----- | 1-9,11, 13-15,17 | |
| A | WO 2021/001007 A1 (NOKIA SOLUTIONS & NETWORKS OY [FI]) 7. Januar 2021 (2021-01-07) <br> * Absatz [0059] - Absatz [0060] * <br> * Absatz [0088] - Absatz [0092] * <br> ----- | 1-17 | |
| A | CN 115 604 725 A (CHINA UNICOM) 13. Januar 2023 (2023-01-13) <br> * Seite 9 - Seite 10 * <br> * Seite 13 - Seite 14 * <br> ----- | 1-17 | **RECHERCHIERTE SACHGEBIETE (IPC)** <br><br> H04W <br> H04B |

Der vorliegende Recherchenbericht wurde für alle Patentansprüche erstellt

| Recherchenort | Abschlußdatum der Recherche | Prüfer |
|---|---|---|
| München | 11. Oktober 2024 | Hartweg, Norman |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 24 17 6135

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-10-2024

| Im Recherchenbericht angeführtes Patentdokument | Datum der Veröffentlichung | Mitglied(er) der Patentfamilie | Datum der Veröffentlichung |
|---|---|---|---|
| US 2021345134 A1 | 04-11-2021 | US 2021345134 A1<br>WO 2020080989 A1 | 04-11-2021<br>23-04-2020 |
| CN 115829467 A | 21-03-2023 | KEINE | |
| WO 2021001007 A1 | 07-01-2021 | CN 114073115 A<br>EP 3994909 A1<br>US 2022361011 A1<br>WO 2021001007 A1 | 18-02-2022<br>11-05-2022<br>10-11-2022<br>07-01-2021 |
| CN 115604725 A | 13-01-2023 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3133825 B1

**In der Beschreibung aufgeführte Nicht-Patentliteratur**

- **T. T. NGUYEN ; R. CAROMI ; K. KALLAS ; M. R. SOURYAL.** Deep Learning for Path Loss Prediction in the 3.5 GHz CBRS Spectrum Band. *2022 IEEE Wireless Communications and Networking Conference (WCNC), Austin, TX, USA,* 2022, 1665-1670